Europäisches Patentamt

European Patent Office

Office européen des brevets

(11) Veröffentlichungsnummer: **0 410 211 A1**

# (12) EUROPÄISCHE PATENTANMELDUNG

(21) Anmeldenummer: **90113265.4**

(22) Anmeldetag: **11.07.90**

(51) Int. Cl.5: **H01R 4/02**

(30) Priorität: **28.07.89 DE 3925120**

(43) Veröffentlichungstag der Anmeldung:
**30.01.91 Patentblatt 91/05**

(84) Benannte Vertragsstaaten:
**AT BE CH DE FR GB IT LI NL**

(71) Anmelder: **Siemens Aktiengesellschaft**
**Wittelsbacherplatz 2**
**D-8000 München 2(DE)**

(72) Erfinder: **Vojta, Erich**
**Habichtweg 9**
**D-8551 Hemhofen(DE)**
Erfinder: **Koch, Volker-Ekkehart, Dr.**
**Am Büchl 39**
**D-8024 Deisenhofen(DE)**

(54) **Verfahren zur Herstellung einer elektrisch leitenden Verbindung zwischen Kupferlackdrähten und Anschlusselementen.**

(57) Das Verschweißen oder Löten von Kupferdrähten mit warmfest oder hochwarmfesten Lackisolationen mit Anschlußelementen (1) von elektrischen Bauteilen beinhaltet bestimmte werkstoffkundliche oder handhabungstechnische Nachteile. Durch ein Verfahren, das den Einsatz von phosphorhaltigem Lot vorsieht, und den Erweichungspunkt der Lackisolation der Kupferlackdrähte (2) mit der Schmelz- bzw. Arbeitstemperatur des Lotes abstimmt, wurde eine Schweißlötung ermöglicht, die hohe reproduzierbare Verbindungsqualitäten aufweist. Eine vorausgehende mechanische Entfernung der Lackisolierung von den Kupferdrähten (2) ist nicht notwendig. Der Einsatz von phosphorhaltigem Lot erübrigt den Einsatz von Flußmitteln. Die Wärmeeinbringung erfolgt in Anlehnung an Schutzgas-, Plasmalichtbogen- oder Laserstrahl-Schweißverfahren.

## FIG 1

EP 0 410 211 A1

# VERFAHREN ZUR HERSTELLUNG EINER ELEKTRISCH LEITENDEN VERBINDUNG ZWISCHEN KUPFERLACKDRÄHTEN UND ANSCHLUSSELEMENTEN

Die Erfindung betrifft ein Verfahren zur Herstellung einer elektrisch leitenden Verbindung zwischen Kupferlackdrähten und Anschlußelementen von elektronischen Bauteilen.

Bei der Herstellung von z. B. Relais werden im allgemeinen lackisolierte Kupferdrähte eingesetzt. Liegt eine besondere Wärmebelastung vor, so ist die Lackisolation entweder warmfest oder hochwarmfest ausgelegt. Die elektrische Verbindung zwischen Anschlußelementen von verschiedenartigen elektrischen Bauteilen und dem Kupferlackdraht wird bisher überwiegend durch Lötverfahren hergestellt. Beim Einsatz eines Lötverfahrens besteht eine besondere Schwierigkeit in der vorher nötigen Entfernung der Isolation, die meistens mechanisch durchgeführt wird. Da der Durchmesser von eingesetzten Kupferlackdrähten im Bereich von 0,03 - 0,3 mm liegt, ist das mechanische Entfernen der Isolierlackschicht nur noch bedingt einsetzbar.

Flußmittelrückstände, die üblicherweise bei Lötverfahren auftreten, beeinträchtigen die Qualität der Verbindung nachteilig.

Die Verwendung einer reinen Schweißverbindung ist ebenfalls mit Qualitätseinbußen verbunden. Der im Material, im Kupfer, vorhandene Sauerstoffgehalt führt zur Bildung von Kupferoxiden, die zu Materialbrüchen führen können.

Der Erfindung liegt die Aufgabe zugrunde, ein Verfahren zur Herstellung einer elektrisch leitenden Verbindung zwischen Kupferlackdrähten und Anschlußelementen von elektronischen Bauteilen zur Verfügung zu stellen, mit dem eine mechanische vorausgehende Abisolation am Kupferlackdraht entfällt und keinerlei Flußmittelrückstände in Verbindung auftreten.

Die Lösung dieser Aufgabe wird durch die Verwendung eines Lotes erreicht, dessen Schmelztemperatur über der Erweichungstemperatur der Lackisolation des Kupferlackdrahtes liegt. Gleichzeitig enthält das Lot Phosphor, wodurch der Einsatz von Flußmittel entfällt. Die hergestellte Verbindung ist eine Kombination aus Schweißung und Lötung.

Der Erfindung liegt die Erkenntnis zugrunde, daß die Abisolation der Kupferlackdrähte durch eine Erwärmung des Isolierlackes über dessen Erweichungstemperatur durchführbar ist. Die Verwendung eines phosphorhaltigen Lotes führt zu einer flußmittelfreien Lötzone. Die Wärmezuführung zur Herstellung der Verbindung geschieht in Anlehnung an ein übliches Schweißverfahren, WIG-, Plasmalichtbogen- oder Laserstrahl-Schweißen. Dies hat den besonderen Vorteil, daß die Energieeinbringung im Gegensatz zum reinen Lötverfahren exakt dosiert werden kann. Dies ergibt vor allem im Hinblick auf eine Automatisierung des gesamten Verfahrens eine gute Reproduzierbarkeit und eine hohe Qualität innerhalb der Verbindung.

Eine bevorzugte Ausgestaltung der Erfindung sieht vor, daß Silberhartlot eingesetzt wird. Silberhartlote, die Phosphor enthalten, sind beispielsweise in der DIN 8513 aufgelistet. Derartige Lote sind aus Silber, Kupfer und Phosphor und eventuell aus weiteren Bestandteilen in verschiedenen Mengenverhältnissen zusammengesetzt. Die Schmelztemperaturen dieser Lote bzw. die Solidustemperatur oder die Arbeitstemperatur liegt auf jeden Fall in einem Berreich, beispielsweise 650°C, in dem sogar hochwarmfest lackisolierte Kupferdrähte abisoliert werden können. Somit ist gewährleistet, daß eine einwandfreie elektrische Verbindung zwischen Kupferlackdraht und Anschlußelement erzeugt wird.

Zur besseren Handhabung während des Verfahrensablaufes ist die Ausbildung des Anschlußelementes in Form einer U-Lasche vorgesehen. Die Biegung der U-Lasche, die in der Innenseite mit dem Lot belegt ist, ist so ausgelegt, daß ein Kupferlackdraht eingeschoben werden kann und in idealer Weise durch leichtes Einklemmen arretierbar ist. Somit ist der Kontakt zwischen Kupferlackdraht, Lotschicht und Anschlußelement hergestellt und es werden keine weiteren Halteelemente für den Kupferlackdraht benötigt.

Eine weitere Ausgestaltung sieht vor, daß die U-Lasche stirnseitig durch eine Wärmequelle in Anlehnung an die genannten Schweißverfahren erhitzt wird und die Schweißlötung erzeugt wird. Dabei entsteht eine Schweißzone, an die sich eine Lötzone anschließt. Der wesentliche Teil der elektrisch leitenden Verbindung ist innerhalb der Lötzone. Damit liegt fest, daß auf der Seite der Schweißzone der überstehende Kupferlackdraht abgetrennt und eingeschmolzen wird und der für die Verbindung an den elektrischen Anschluß wesentliche Teil des Kupferlackdrahtes aus der Lötzone herausführt.

Im folgenden wird anhand von schematischen Figuren ein Ausführungsbeispiel beschrieben.

Die Figur 1 zeigt eine U-Lasche in der Draufsicht und in der Seitenansicht.

Die Figur 2 zeigt eine U-Lasche mit Kupferlackdraht 2 und die ungefähre Ausbildung der Schweißzone 5 und der Lötzone 4.

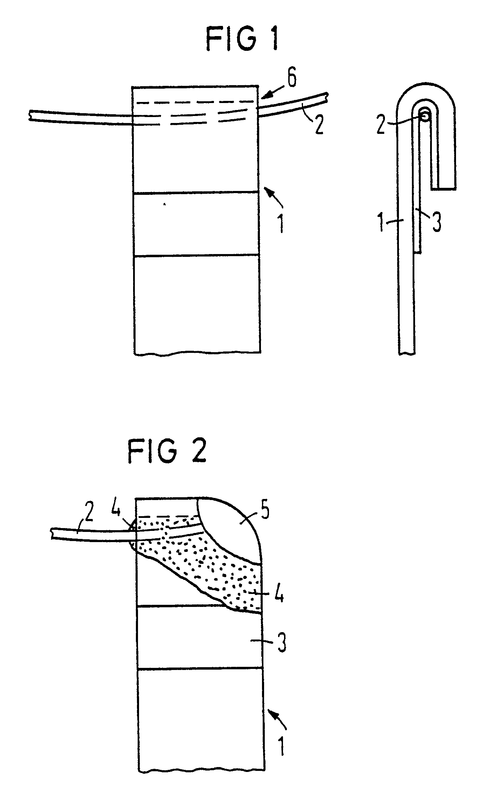

In der Figur 1 ist ein Anschlußelement 1 dargestellt, dessen Ende als U-Lasche gebogen ist. Die Lotschicht 3 wird in der Regel durch Plattierung aufgebracht und so plaziert, daß sie innerhalb der U-Lasche liegt. Sie reicht über die gesamte Breite des Anschlußelementes 1. Der Kupferlackdraht 2 ist derart in die U-Lasche eingeschoben oder eingezogen worden, daß er an deren Ende, der späteren Verbindungszone 6, arretiert ist.

In der Figur 2 ist der ungefähre Aufbau des Anschlußelementes nach der Schweißlötung dargestellt. Die Schweißzone 5 ist auf der Seite des Anschlußelementes 1 angesiedelt, von der aus die Wärmeeinbringung in Anlehnung an ein Schweißverfahren geschah. Im Anschluß an die Schweißzone 5 folgt die Lötzone 4, in die der in diesem Bereich abisolierte Kupferlackdraht 2 eingebettet ist. Die Lotschicht 3 ist größtenteils aufgeschmolzen worden und nach Beendigung des Verfahren wieder erstarrt.

Für die Verarbeitung von hochwarmfest lackisolierten Kupferdrähten ist der Einsatz eines Hartlotes notwendig. Hier können beispielsweise Lot wie L-Ag15P (bekannt unter dem Handelsnamen Silfos) oder L-Ag5P oder L-Ag2P verwendet werden. Ebenso geeignet ist das Lot L-CuP8. Die Arbeitstemperaturen liegen in der Regel um 700° C. Der Bereich der Arbeitstemperaturen reicht etwa von 650 bis 800° C.

Da für viele elektrische Bauteile Umgebungstemperaturen von 200° C im Betrieb auftreten, ist der Einsatz von hochwarmfest lackisolierten Kupferdrähten notwendig. Diese können durch das erfindungsgemäße Verfahren problemlos mit den Anschlußelementen 1 der Bauteile verbunden werden.

## Ansprüche

1. Verfahren zur Herstellung einer elektrisch leitenden Verbindung zwischen Kupferlackdrähten (2) und Anschlußelementen (1) von elektrischen Bauelementen, z.B. Relais, bestehend aus folgenden Schritten:
- Verwendung eines Lotes, dessen Schmelztemperatur über der Erweichungstemperatur der Lackisolation des Kupferlackdrahtes (2) liegt und Phosphor enthält,
- Aufbringen einer Lotschicht (3) auf ein Anschlußelement (1),
- Positionierung des Kupferlackdrahtes (2) an der Verbindungszone (6),
- Herstellung einer Schweißlötung mittels eines WIG-, Plasmalichtbogen- oder Laserstrahl-Schweißverfahrens, wobei eine Schweißzone (5) und eine Lötzone (4) entstehen.

2. Verfahren nach Anspruch 1,
**dadurch gekennzeichnet ,**
daß ein Silberhartlot eingesetzt wird.

3. Verfahren nach einem der vorhergehenden Ansprüche,
**dadurch gekennzeichnet ,**
daß das Anschlußelement (1) an der Verbindungszone in Form einer U-Lasche ausgebildet ist, die Lotschicht (3) innerhalb der U-Lasche aufgebracht ist und der Kupferlackdraht (2) durch Einbringen in die U-Lasche positioniert ist.

4. Verfahren nach Anspruch 3,
**dadurch gekennzeichnet ,**
daß zur Herstellung der Schweißlötung das Schweißverfahren stirnseitig an der U-Lasche einwirkt und die Schweißzone (5) mit der dahinterliegenden Lötzone (4) erzeugt.

FIG 1

FIG 2

Europäisches
Patentamt

**EUROPÄISCHER RECHERCHENBERICHT**

Nummer der Anmeldung

EP    90 11 3265

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-314319 (HITACHI LTD) <br> * Seite 3, Zeilen 16 - 48 * <br> * Seite 4, Zeilen 4 - 20 * <br> * Seite 5, Zeile 55 - Seite 6, Zeile 23; Figuren 1a-1c * <br> --- | 1-3 | H01R4/02 |
| A | DE-A-3246660 (MITSUBISHI) <br> * Seite 8, Zeile 17 - Seite 9, Zeile 23; Figur 7 * <br> --- | 1 | |
| A | DE-B-1640471 (IBM) <br> * Spalte 2, Zeile 34 - Spalte 4, Zeile 5; Figuren 3, 4 * <br> --- | 1 | |
| A | EP-A-201129 (PHILIPS) <br> * Spalte 3, Zeile 12 - Spalte 3, Zeile 27 * <br> ----- | 1 | |

RECHERCHIERTE SACHGEBIETE (Int. Cl.5 )

H01R
B23K

Der vorliegende Recherchenbericht wurde für alle Patentansprüche erstellt

| Recherchenort | Abschlußdatum der Recherche | Prüfer |
|---|---|---|
| BERLIN | 31 OKTOBER 1990 | CLOSA, D |